(19) **Europäisches Patentamt / European Patent Office / Office européen des brevets**

(11) **EP 1 962 285 A1**

(12) # EUROPEAN PATENT APPLICATION

(43) Date of publication:
**27.08.2008 Bulletin 2008/35**

(21) Application number: **07102791.6**

(22) Date of filing: **21.02.2007**

(51) Int Cl.:
*G11B 7/0065* (2006.01)     *G11B 7/013* (2006.01)
*G11B 7/007* (2006.01)

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Deutsche Thomson OHG**
**30625 Hannover (DE)**

(72) Inventors:
• **Przygodda, Frank**
  **78050 Villlingen-Schwenningen (DE)**

• **Hoßfeld, Wolfgang**
  **78050 VILLINGEN-SCHWENNINGEN (DE)**
• **Malki, Oliver**
  **78052 VS-PFAFFENWEILER (DE)**

(74) Representative: **Schmidt-Uhlig, Thomas**
  **Deutsche Thomson OHG**
  **European Patent Operations**
  **Karl-Wiechert-Allee 74**
  **30625 Hannover (DE)**

(54) **Data page with increased data capacity**

(57)     The present invention relates to a data page (6) for an optical storage system with an increased data capacity, to a modulation method and a method for recording such a data page (6), and to an apparatus for reading from and/or writing to optical storage media using such a modulation method or recording method. According to the invention, in a data page (6) for an optical storage system, wherein data are arranged as an array (1) of pixels (2), where each pixel (2) has a size below the optical resolution of the optical storage system, and wherein data bits are represented by groups of pixels (3), where each group of pixels (3) has a size equal to or greater than the optical resolution of the optical storage system, the positions (4) and/or the sizes of the groups of pixels (3) are adjustable in steps of the pixel size.

Fig. 2

EP 1 962 285 A1

**Description**

The present invention relates to a data page for an optical storage system with an increased data capacity, to a modulation method and a method for recording such a data page, and to an apparatus for reading from and/or writing to optical storage media using such a modulation method or recording method.

In holographic data storage digital data are stored by recording the interference pattern produced by the superposition of two coherent laser beams, where one beam, the so-called 'object beam', is modulated by a spatial light modulator (SLM) and carries the information to be recorded. The second beam serves as a reference beam. The interference pattern leads to modifications of specific properties of the storage material, which depend on the local intensity of the interference pattern. Reading of a recorded hologram is performed by illuminating the hologram with the reference beam using the same conditions as during recording. This results in the reconstruction of the recorded object beam.

One advantage of holographic data storage is an increased data capacity. Contrary to conventional optical storage media, the volume of the holographic storage medium is used for storing information, not just a single or few 2-dimensional layers. One further advantage of holographic data storage is the possibility to store multiple data in the same volume, e.g. by changing the angle between the two beams or by using shift multiplexing, etc. Furthermore, instead of storing single bits, data are stored as data pages. Typically a data page consists of a matrix of light-dark-patterns, i.e. a two dimensional binary array or an array of grey values, which code multiple bits. This allows to achieve increased data rates in addition to the increased storage density. The data page is imprinted onto the object beam by the spatial light modulator (SLM) and detected with a detector array.

For any optical storage system, apart from near field techniques, the diffraction limit determines the minimum distance between two information units that can be distinguished.

For conventional 1-dimensional optical storage technologies, such as CD (Compact Disk), DVD (Digital Versatile Disk), or BD (BluRay Disk), the smallest resolvable information units are pits. Typically 1-dimensional run-length limited (RLL) modulation is used. Sequences of numbers of zero and ones of different length e.g. 3T, 4T, 5T, where T denotes the unit length, are used to modulate the data.

For 2-dimensional, i.e. page oriented data storage technologies like holographic storage, the smallest resolvable information units are symbols, i.e. groups of pixels of a data page. A symbol is obtained by grouping multiple pixels of the SLM. For example, in Kawano et al.: "Digital Data Storage and Computing by a Vector Holographic Memory System", Jpn. J. Appl. Phys. Vol. 40 (2001), pp.1841-1845, a block of $2\times2$ SLM pixels represents a single symbol of a data page. For holographic data storage usually a 2-dimensional modulation scheme is applied. Typically the size of one symbol is designed to be greater or equal to the diffraction limit of the optical system. A common approach is to divide each data page into a set of sub pages or blocks. Each block consists of e.g. $4\times4$ or $5\times5$ channel bits. During modulation the user data is transformed into a set of blocks. Using, for example, three on-symbols in each $4\times4$ block leads to a capacity of approximately nine bits of user data per block.

Increasing the data capacity and the data rate are two of the main tasks when developing holographic data storage systems. Though the principle advantage of holographic data storage compared to conventional optical storage systems has been shown theoretically and experimentally, in praxis a huge effort has to be made to reach the full capability of holographic data storage. Therefore, a solution for increasing both the data capacity as well as the data rate is of general interest. One possibility is to enlarge the lens system. However, due to the mechanics of the servo system the weight of the lens system is limited. Therefore, improvements of the optical path by increasing the size of the lens system are limited.

It is an object of the invention to propose a data page for an optical storage system with an increased data capacity.

According to the invention, this object is achieved by a data page for an optical storage system, wherein data are arranged as an array of pixels, where each pixel has a size below the optical resolution of the optical storage system, and wherein data bits are represented by groups of pixels, where each group of pixels has a size equal to or greater than the optical resolution of the optical storage system, which is characterized in that the positions and/or the sizes of the groups of pixels are adjustable in steps of the pixel size.

A corresponding modulation method for a data page for an optical storage system has the steps of:

- arranging data as an array of pixels, where each pixel has a size below the optical resolution of the optical storage system;
- representing data bits by groups of pixels, where each group of pixels has a size equal to or greater than the optical resolution of the optical storage system; and
- adjusting the positions and/or the sizes of the groups of pixels in steps of the pixel size.

The data page according to the invention enables to increase the data capacity of the entire optical storage medium by increasing the amount of user data per data page. Though the data page is suitable of any page oriented storage system, it is especially useful for holographic data storage systems. The storage capacity is increased significantly without modification of the optical path by using a high resolution SLM and a high resolution detector. As the electronic components like SLM and detector are available as high speed and high resolution devices, the higher data capacity per data page additionally leads to a higher data rate.

The invention makes use of the fact that differences of positions or sizes of channel bits or groups of pixels can be written and detected more precisely than the resolution given by the minimum spot size corresponding to the diffraction limit of the optical system. To be able to use this effect the optical system is designed in such a way that always a group of SLM pixels, where the size of the group can be greater or equal to the diffraction limited minimum spot size, represents one channel bit.

Advantageously, the data are coded in blocks using the positions of the groups of pixels within the blocks and/or the sizes of the groups of pixels. Information is stored by spatially shifting the groups in units of one pixel on the SLM, or by varying the size of the groups in units of one pixel. Because the minimum shift or size variation is smaller than the optical resolution, more information can be stored. For reading the detector needs to have a sufficiently high resolution to detect the small differences in the positions or sizes of the channel bits. This can be regarded as an adaptation of run-length limited (RLL) modulation to a page oriented data storage system. The minimum distance between two adjacent groups of pixels within a block is equal to or greater than the optical resolution of the optical storage system. In this way it is ensured that all groups of pixels within a block can be reliably detected.

The invention has two important aspects. First, it introduces a numerically efficient realization of an RLL modulation below optical resolution. Second, it proposes a block wise RLL modulation with adjustable white rate. As the storage capacity of a holographic data storage system generally depends on the white rate (i.e. the percentage of one attribute (white symbols)), the white rate is important parameter in holographic data storage. In the case of blocks of $8 \times 8$ SLM pixels, where the optical resolution is $2 \times 2$ SLM pixels, the white rate can easily be adjusted by setting the number of symbols (i.e. $2 \times 2$ SLM pixels) per block. As this number is the same for all blocks, also the white rate of the whole data page is adjusted in this way.

For recording data on an optical storage medium, advantageously the modulation method according to the invention is used for generating a data page, which is then recorded on the optical storage medium.

For reading a data from an optical storage medium, a data page according to the invention is first read from the optical storage medium. Subsequently the positions and/or the sizes of groups of pixels within the data page are detected.

An optical storage medium advantageously includes data in the form of a data page according to the invention. For example, in case of a holographic storage medium the data page is recorded as a hologram in a holographic storage layer.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:

Fig. 1    shows a set of SLM pixels according to the invention,

Fig. 2    gives an example for a block code with $2 \times 2$ SLM pixels for each symbol and three symbols in each block of $8 \times 8$ SLM pixels,

Fig. 3    illustrates a definition of a distance measure,

Fig. 4    depicts a block with an L-shaped forbidden area,

Fig. 5    shows an example of a data page with different sizes of channel bits,

Fig. 6    shows an example of a data page with conventional block wise coding,

Fig. 7    depicts the diffraction limited image of the SLM data page of Fig. 6 on a detector,

Fig. 8    shows a first example of a data page, where each symbol consists of $2 \times 2$ SLM pixels,

Fig. 9    depicts the diffraction limited image of the SLM data page of Fig. 8 on the detector,

Fig. 10    shows a further example of a data page, where each symbol consists of $2 \times 2$ SLM pixels,

Fig. 11    depicts the diffraction limited image of the SLM data page of Fig. 10 on the detector, and

Fig. 12    schematically shows an apparatus for reading and/or recording a holographic storage medium.

Holographic data storage systems generally use a spatial light modulator to produce data pages in an object beam, which are stored in a holographic storage medium via interference of the object beam and a reference beam. During reading the reference beam illuminates the hologram and reconstructs the object beam with the data page, which is detected via a matrix detector.

The optical resolution of the entire system is determined by the optical system, consisting of lenses, mirrors, apertures, etc. The optical resolution determines the diffraction limited minimum distance of two illuminated points, e.g. two SLM pixels, which can be distinguished after being sent through the optical system.

According to known approaches for holographic data storage systems the SLM is designed such that the size of each SLM pixel (channel bit) corresponds to the above diffraction limit. In this way it is ensured that there is no information loss caused by the limited optical resolution.

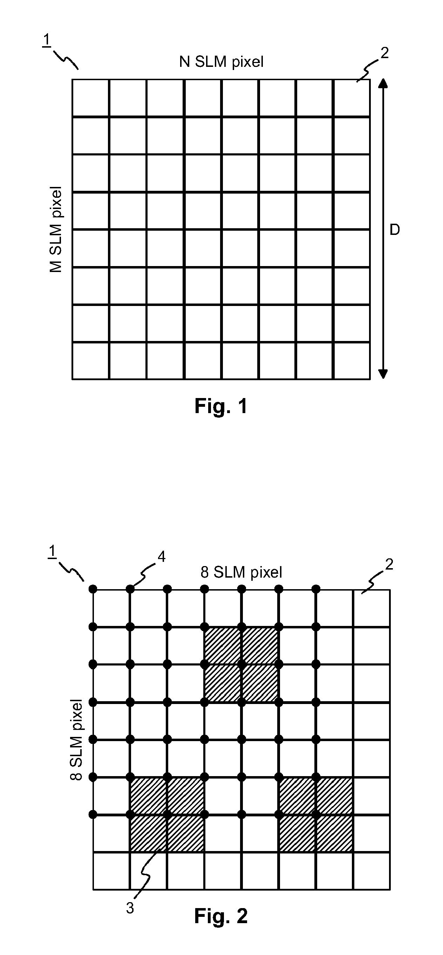

In Fig. 1 a set 1 of SLM pixels 2 according to the invention is shown. The hatched area outlines the diffraction limited minimum spot size D. For simplicity this spot is assumed to be rectangular. Of course, it can also be regarded as the envelope of the Airy disk resulting form a circular aperture. The rectangle consists of M×N pixels 2 and will be called a symbol in the following. The size of an SLM pixel 2 is explicitly chosen below the optical resolution.

With the above setup many different modulation schemes can be realized, either block wise or based on the entire data page. To make the basic idea clearer, and as an example of a numerically effective realization of the modulation scheme, in the following an 8×8 SLM pixel block modulation with 3 symbols and M=N=2 shall be discussed.

For conventional modulation the number of combinations of three on-pixels (SLM pixel) in a 4×4 SLM pixel block (known as 4×4-3 modulation) is equal to the selection of 3 out of 16, i.e. the number of combinations equals 560. This corresponds to a capacity of ~9.1 bits of user data per pixel block.

As an example for the new modulation a block code with 2×2 SLM pixels for each symbol 3 corresponding to the optical resolution is illustrated in Fig. 2. In the modulation scheme in Fig. 2 the number of combinations is equal to selecting 3 out of 49=18424. The black circles 4 indicate all possible positions of the upper left corner of a 2x2 symbol 3. Due to the diffraction limit not every combination out of this 18424 can be distinguished. Therefore, some constraints have to be introduced to determine the suitable combinations.

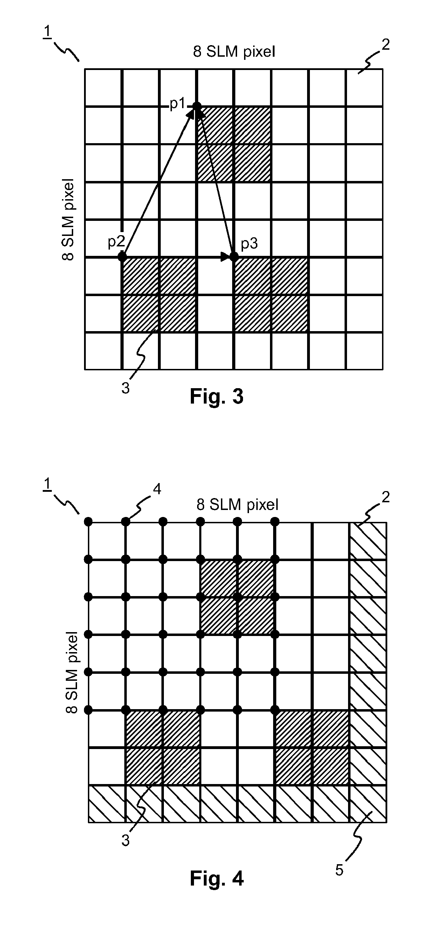

The constraints are based on distances between the upper left corners of symbols 3. The distances may likewise be determined using any other point of the symbols 3, e.g. the center. Of course, it has to be ensured that the same point is chosen for all symbols 3. Defining the constraints based on the distances is not the only possibility. However, this approach can easily be implemented numerically. In Fig. 3 the definition of the distance measure is shown and some exemplary distances are indicated for three symbols p1, p2, p3. The distance measure is a square norm relative to the upper left corner of a 2×2 symbol:

$$\|(\mathtt{p1},\mathtt{p2})\| = \left(\Delta x_{12}\right)^2 + \left(\Delta y_{12}\right)^2 = 20$$

$$\|(\mathtt{p2},\mathtt{p3})\| = 9$$

$$\|(\mathtt{p1},\mathtt{p3})\| = 17$$

where $\Delta x_{12}$ and $\Delta y_{12}$ denote the distance (in SLM pixels) of the upper left corners of p1 and p2 in horizontal direction and in vertical direction, respectively. The distance of 9 between the two 2x2 symbols p2 and p3 is not allowed, as in this case the gap between the symbols is smaller than the optical resolution, which was assumed to be 2×2 SLM pixels. A minimum distance of 4 ensures non-overlapping sub-blocks.

After removing all undesired combinations a subset of 7414 possible blocks remains. This leads to approximately 12.8 bits of user data per modulation block. Compared to the conventional block wise 4×4-3 modulation this means an increase of nearly 3.7 bits of user data per block. In addition, compared to the standard 4×4-3 block code the white rate on the SLM and the number of blocks per data page remain constant. This leads to an increased data capacity per page, and consequently to a higher data rate and a higher overall data capacity of the holographic medium. It is to be noted that in the above discussion the distance constraints are considered only within a block. Of course, additional constraints between the blocks are likewise possible, though they are difficult to determine numerically, as each block has eight direct neighbors. An alternative is to determine an area 5 of the block, where no white symbols are allowed. This is illustrated schematically in Fig. 4. As can be seen, the number of possible positions 4 of the 2×2 symbols 3 is reduced. Which constraints are optimum depends strongly on the specific design of the data channel. For a tradeoff between error rate and data capacity the constraints may need to be determined experimentally. Anyway, even for the case of D>10 and no direct neighbors, i.e. D≠4, 11.27 bits per block (2466 combinations) are achieved.

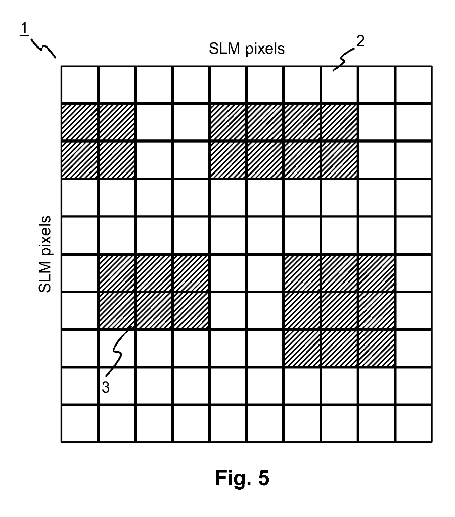

More general modulation schemes exist, where the data pages do not consist of blocks of equal size. An example of a data page 6 with different sizes of channel bits is shown in Fig. 5. In this case it is not necessary to arrange the channel bits in blocks as those shown in Fig 2. and Fig. 3. If the symbols are arranged in blocks, the block size will generally be larger than the 8×8 SLM pixels described above. Additional information on such 2-dimensional run-length limited modulation schemes can be found, for example, in Davey et al.: "Two-Dimensional Coding for a Multi-Track Recording System to Combat Inter-Track Interference", IEEE Trans. Magn., VOL. 34 (1998), pp. 1949 and Nagy et al.: "Bit-Stuffing Algorithms and Analysis for Run-Length Constrained Channel in Two and Three Dimensions", IEEE Trans. Inf. Theo. Vol. 50 (2004), pp. 3146. These methods can also be adapted to the idea of using SLM pixels below the optical resolution, though with a higher numerical complexity. In Davey et al. the numerical complexity is estimated to $O(2^n)$, where n denotes the number of channel bits in one direction; a data page would consist of n×n channel bits. The modulation method according to the invention using a fixed size of the symbols, in contrast, has an estimated numerical complexity of $O(n^2)$. Therefore, the computational complexity is much smaller.

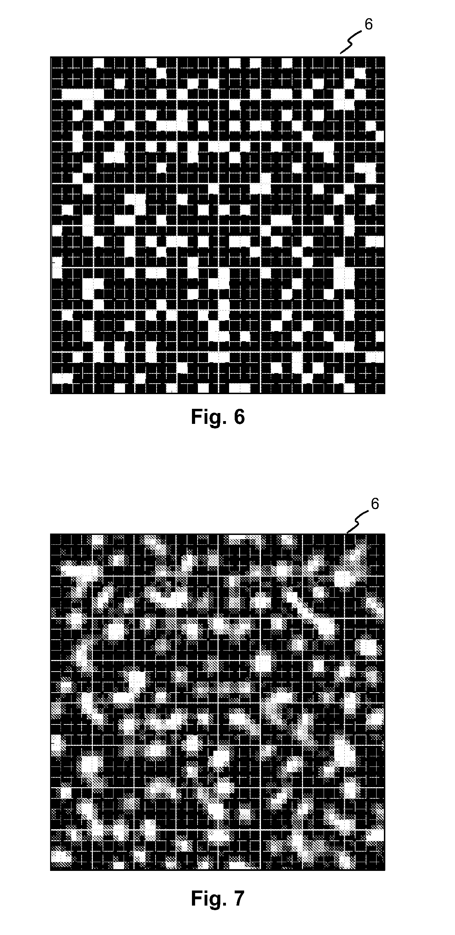

An example of a data page 6 with conventional block wise coding is illustrated in Fig. 6. A typical 4×4-3 block modulation is shown, i.e. each block has 4×4 SLM pixels, of which three pixels are white pixels. The data page 6 consists of 8×8=64 blocks. The user data on this page is approximately 64*9.1 bits≈582 bits≈72 byte. The diffraction limited image of the SLM data page 6 of Fig. 6 on the detector is illustrated in Fig. 7.

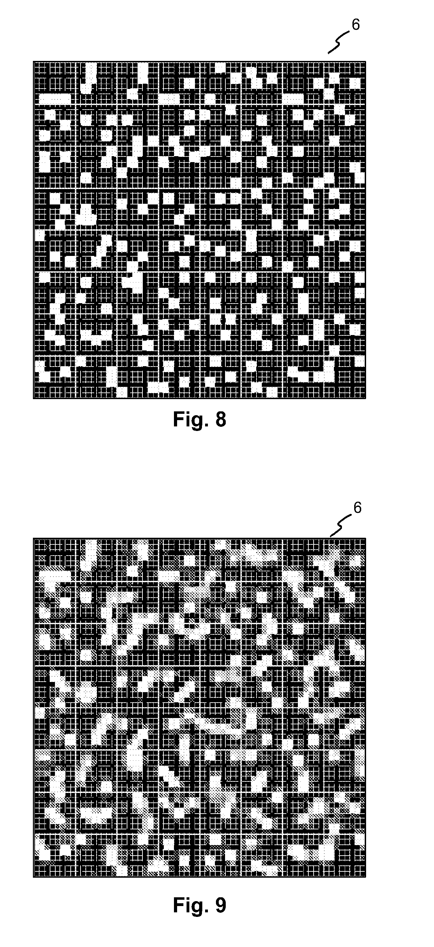

In Fig. 8 an exemplary SLM data page 6 is shown, where each single symbol is built by 2×2 SLM pixels. Each data page 6 consists of 8×8=64 blocks, each block having three white symbols, each symbol with 2×2 SLM pixels. The constraints - no overlap of the white symbols - lead to approximately 64*13.53 bits≈865 bit≈108 byte of user data on this page. The diffraction limited image of the SLM data page 6 of Fig. 8 on the detector is illustrated in Fig. 9. The diffraction limit was chosen as 2×2 SLM pixels. Simulations have proven that the original data can be demodulated.

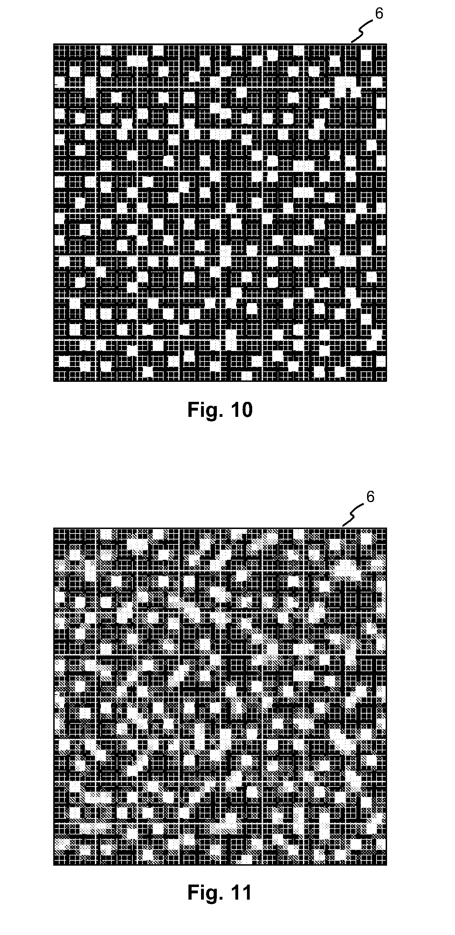

Fig. 10 depicts a further example of an SLM data page 6 using symbols consisting of 2×2 SLM pixels. In this case the constraints - distance>10 and no direct neighbors within a block - lead to approximately 64*11.27 bits≈721 bits≈90 byte of user data. The diffraction limited image of the SLM data page 6 of Fig. 10 on the detector is shown in Fig. 11. Also for this example simulations have proven that the original data can be demodulated.

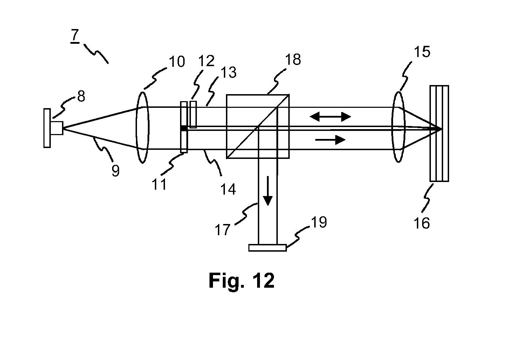

In Fig. 12 an apparatus 7 for reading and/or recording a holographic storage medium 16 is shown schematically. A source of coherent light, e.g. a laser diode 8, emits a light beam 9, which is collimated by a collimating lens 10. The light beam 9 is then divided into two separate light beams 13, 14. In the example the division of the light beam 9 is achieved using a first beam splitter 11. However, it is likewise possible to use other optical components for this purpose. A spatial light modulator (SLM) 12 modulates one of the two beams, the so called "object beam" 13, to imprint a 2-dimensional data pattern. Both the object beam 13 and the further beam, the so called "reference beam" 14, are focused into a holographic storage medium 16, e.g. a holographic disk or card, by an objective lens 15. At the intersection of the object beam 13 and the reference beam 14 an interference pattern appears, which is recorded in a photo-sensitive layer of the holographic storage medium 16.

The stored data are retrieved from the holographic storage medium 16 by illuminating a recorded hologram with the reference beam 14 only. The reference beam 14 is diffracted by the hologram structure and produces a copy of the original object beam 13, the reconstructed object beam 17. This reconstructed object beam 17 is collimated by the objective lens 9 and directed onto a 2-dimensional array detector 19, e.g. a CCD-array, by a second beam splitter 18. The array detector 19 allows to reconstruct the recorded data.

## Claims

1. Data page (6) for an optical storage system (7), wherein data are arranged as an array (1) of pixels (2), where each pixel (2) has a size below the optical resolution of the optical storage system, and wherein data bits are represented by groups of pixels (3), where each group of pixels (3) has a size equal to or greater than the optical resolution of the optical storage system (7), **characterized in that** the positions (4) and/or the sizes of the groups of pixels (3) are adjustable in steps of the pixel size.

2. Data page (6) according to claim 1, **wherein** the data are coded in blocks using the positions (4) of the groups of pixels (3) within the blocks and/or the sizes of the groups of pixels (3).

3. Data page (6) according to one of claims 1 or 2, wherein the minimum distance between two adjacent groups of pixels (3) within a block is equal to or greater than the optical resolution of the optical storage system (7).

4. Modulation method for a data page (6) for an optical storage system (7), having the steps of:

   - arranging data as an array (1) of pixels (2), where each pixel (2) has a size below the optical resolution of the optical storage system (7);
   - representing data bits by groups of pixels (3), where each group of pixels (3) has a size equal to or greater than the optical resolution of the optical storage system (7); and
   - adjusting the positions (4) and/or the sizes of the groups of pixels (3) in steps of the pixel size.

5. Modulation method according to claim 4, further having the step of coding the data in blocks using the positions (4) of the groups of pixels (3) within the blocks and/or the sizes of the groups of pixels (3).

6. Modulation method according to claim 4 or 5, further having the step of setting the minimum distance between two adjacent groups of pixels (3) within a block equal to or greater than the optical resolution of the optical storage system (7).

7. Method for recording data on an optical storage medium (16), having the steps of:

   - modulating a data page (6) with a modulation method according to one of claims 4 to 6; and
   - recording the data page (5) on the optical storage medium (16).

8. Method for reading data from an optical storage medium (16), having the steps of:

- reading a data page (6) according to one of claims 1 to 3 from the optical storage medium (16); and
- detecting the positions (4) and/or the sizes of groups of pixels (3) within the data page.

9. Optical storage medium (16), **characterized in that** it includes at least one data page (5) according to one of claims 1 to 3.

10. Optical storage medium (16) according to claim 9, wherein it is a holographic storage medium.

11. Apparatus (7) for reading or recording an optical storage medium (16), **characterized in that** it is adapted to read or record a data page (6) according to one of claims 1 to 3.

N SLM pixel

M SLM pixel

D

**Fig. 1**

8 SLM pixel

8 SLM pixel

**Fig. 2**

Fig. 3

Fig. 4

SLM pixels

SLM pixels

**Fig. 5**

Fig. 6

Fig. 7

**Fig. 8**

**Fig. 9**

Fig. 10

Fig. 11

**Fig. 12**

**EUROPEAN SEARCH REPORT**

Application Number

EP 07 10 2791

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/050544 A1 (HORIMAI HIDEYOSHI [JP]) 9 March 2006 (2006-03-09) * page 4, paragraph 49 - page 6, paragraph 60 * * page 7, paragraph 72 - page 7, paragraph 74 * ----- | 1-11 | INV. G11B7/0065 G11B7/013 G11B7/007 |
| X | US 6 413 680 B1 (WATANABE OSAMU [JP] ET AL) 2 July 2002 (2002-07-02) * column 25, line 35 - column 26, line 6 * * column 15, line 55 - column 16, line 48 * * column 4, line 37 - column 10, line 59 * ----- | 1-11 | |
| A | WO 2006/061777 A (KONINKL PHILIPS ELECTRONICS NV [NL]; HENDRIKS ROBERT F M [NL]) 15 June 2006 (2006-06-15) * the whole document * ----- | 1-11 | |
| A | EP 1 734 516 A (PIONEER CORP [JP]) 20 December 2006 (2006-12-20) * the whole document * ----- | 1-11 | TECHNICAL FIELDS SEARCHED (IPC) G11B |

The present search report has been drawn up for all claims

| Place of search | Date of completion of the search | Examiner |
|---|---|---|
| The Hague | 11 July 2007 | BREZMES ALONSO, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 10 2791

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2007

| Patent document cited in search report | | Publication date | Patent family member(s) | | Publication date |
|---|---|---|---|---|---|
| US 2006050544 | A1 | 09-03-2006 | NONE | | |
| US 6413680 | B1 | 02-07-2002 | NONE | | |
| WO 2006061777 | A | 15-06-2006 | NONE | | |
| EP 1734516 | A | 20-12-2006 | CN | 1938764 A | 28-03-2007 |
| | | | WO | 2005098830 A1 | 20-10-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **KAWANO et al.** Digital Data Storage and Computing by a Vector Holographic Memory System. *Jpn. J. Appl. Phys.,* 2001, vol. 40, 1841-1845
- **DAVEY et al.** Two-Dimensional Coding for a Multi-Track Recording System to Combat Inter-Track Interference. *IEEE Trans. Magn,* 1998, vol. 34, 1949
- **NAGY et al.** Bit-Stuffing Algorithms and Analysis for Run-Length Constrained Channel in Two and Three Dimensions. *IEEE Trans. Inf. Theo,* 2004, vol. 50, 3146